Europäisches Patentamt

European Patent Office

Office européen des brevets

(11) Publication number: **0 248 524 B1**

(12) **EUROPEAN PATENT SPECIFICATION**

(45) Date of publication of patent specification: **13.05.92**    (51) Int. Cl.⁵: **B01D 15/02**

(21) Application number: **87303691.7**

(22) Date of filing: **27.04.87**

(54) Method of separating and/or purifying bio-affecting substances using particulate, polymeric adsorbents.

(30) Priority: **28.04.86 US 854983**
**10.04.87 US 34656**

(43) Date of publication of application:
**09.12.87 Bulletin 87/50**

(45) Publication of the grant of the patent:
**13.05.92 Bulletin 92/20**

(84) Designated Contracting States:
**AT BE CH DE ES FR GB IT LI NL SE**

(56) References cited:
**EP-A- 0 127 737**
**US-A- 4 474 690**
**US-A- 4 523 997**

**Biotechnology Letters vol. 6, no. 8, 1984,
pages 481 - 486; I.GEAHEL et al.: "Integration
of ion exchange and ultrafiltration steps
studied during purification of formate de-
hydrogenase using deae dextran"**

(73) Proprietor: **ROHM AND HAAS COMPANY**
**Independence Mall West**
**Philadelphia Pennsylvania 19105(US)**

(72) Inventor: **Byers, Michael Joe**
**PO Box 274**
**Gwynedd, Pennsylvania 19436(US)**
Inventor: **Isacoff, Eric Gilbert**
**9 Jupiter Drive, Richboro**
**Pennsylvania 19436(US)**
Inventor: **Naples, John Otto**
**1570 Dreshertown road, Dresher**
**Pennsylvania 19025(US)**

(74) Representative: **Tanner, James Percival et al
ROHM AND HAAS (UK) LTD. European Oper-
ations Patent Department Lennig House 2
Mason's Avenue
Croydon CR9 3NB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention is concerned with a method for the separation and/or purification of biomaterial using membrane filtration.

Ultrafiltration is a method widely used for the separation (including concentration) and/or purification of biomaterials. One such method is described by Geahel and Kula in Biotechnology Letters, Vol. 6(8), 481-6, 1984. In that method, a solution of a dehydrogenase in a liquid medium is purified by first binding it to a water-soluble dextran of high molecular weight and then subjecting the solution to ultrafiltration. The dehydrogenase-dextran complex is too large to permeate the ultrafiltration membrane, but the impurities in the solution are not, with the result that the complex is retained by the filter and the impurities pass into the permeate. When the impurities have thus been removed from the solution, the dehydrogenase is liberated (desorbed) from the dextran by increasing the ionic strength of the solution and is recovered.

This method has two basic disadvantages. Firstly, the dextran is soluble in the medium, and it may therefore slip through the pores of the ultrafiltration membrane because of its elongated molecular structure. Although a membrane with smaller pores could remedy this disadvantage as it would reduce the number of dextran molecules slipping through the pores, it would also limit the size of impurity molecules that could be separated from the dextran-product complex, thereby reducing the efficiency of the separation. Secondly, the high molecular weight dextran complex tends to accumulate on the filter membrane to form a secondary membrane or concentration polarization layer, which restricts flow through the filter.

US-A-4,474,690 and EP-A-0127737 describe recovery of peptide-containing compounds by combined affinity-chromatographic purification and ultrafiltration wherein a ligand specific to the peptide and bound to a macromolecular solid carrier is complexed with the peptide and the complex in solution is subjected to membrane filtration leaving impurities in the permeate. The peptide is then split off from the ligand and carrier. Carrier materials include synthetic latex polymers of the acrylic derivative type. The technique is complicated by the requirement of a peptide specific ligand and therefore has limited applicability.

We have now found that the foregoing disadvantages and limitations can be overcome or minimized by using the method of the present invention in which a microsized particulate, polymeric adsorbent is used as the principal complexing agent.

According to the present invention there is provided a method for (i) separating a first water-soluble or water-dispersible bio-affecting substance, contained in a first liquid medium with one or more other components selected from impurities and other water-soluble and/or water-dispersible bio-affecting substances, from said one or more other components, and/or (ii) purifying said first bio-affecting substance contained in said first liquid medium together with said one or more other components, characterized in that the method comprises:-

(a) forming a mixture comprising the first liquid medium and particulate, polymeric adsorbent capable of preferentially adsorbing the first bio-affecting substance or said one or more other components therefrom, the adsorbent having an average particle size of 0.01 to 5 $\mu$m and being selected from ion exchange resins and uncharged, unfunctionalized polymer particles, whereby the adsorbent reversibly binds the first bio-affecting substance or said one or more other components to form a complex;

(b) subjecting the mixture from step (a) to membrane filtration, the membrane being impermeable to said complex, whereby said first bio-affecting substance is separated from said one or more other components and/or is purified.

In a preferred embodiment of the present invention the first water-soluble or water dispersible bio-affecting substance is (i) separated from the first liquid medium, and/or (ii) is purified. In this embodiment the particulate polymeric adsorbent is capable of preferentially adsorbing the first bio-affecting substance from the first liquid medium, whereby the adsorbent reversibly binds the first bio-affecting substance to form a complex, and the membrane is permeable to the one or more other components but not to the complex, whereby the complex and the one or more other components are separated and/or the first bio-affecting substance is purified. In this embodiment, the method may additionally comprise the step of:

(c) liberating the first bio-affecting substance from the polymer particles of the complex into a second liquid medium.

For convenience, the present invention, the present invention will hereinafter be described with particular reference to the above preferred embodiment.

When the liquid medium, containing the adsorbent/biomaterial complex, is subjected to membrane filtration, the adsorbent/biomaterial complex, because it is insoluble and because its particles are larger than the membrane filter pores, is retained by the filter, but any impurities and/or other biomaterials pass through

EP 0 248 524 B1

the filter into the permeate, where they can be collected and removed. The adsorbed biomaterial can then be liberated from the adsorbent into a liquid medium, passed through the filter and recovered, while the regenerated adsorbent is retained by the filter and can be reused.

The invention thus provides a new form of chromatographic separation and/or purification of biomaterials, particularly with respect to proteinaceous materials. In contrast to standard chromatography, the microsized polymeric adsorbents flow like liquids and are not packed in a column as are conventional adsorbents. Therefore, there is no problem resulting from weight of adsorbent particles, i.e. there is no column to collapse of its own weight, nor will packing occur, which would cause restricted flow and undesirable pressure drop in a column. Consequently, the adsorbents can carry biomaterial easily through the lumens of the fine hollow fibers of ultrafiltration cartridges (where impurities or non-adsorbed biomaterials pass into the permeate) for recirculation to, and concentration of effluent in, an adsorption vessel. The adsorbent is thus indefinitely reusable over many cycles.

As used in this specification, the term "biomaterial" means any water-soluble or water-dispersible bio-affecting substance, whether of biological or non-biological origin. Biomaterials include compounds, molecules, polymers, particles and simple as well as complex substances which exist in nature or which may be synthesized by biological or non-biological processes. The term thus includes proteinaceous substances (such as albumins and enzymes), amino acids, nucleic acids, peptides and polypeptides, antibodies, antigens, steroids, hormones, antibiotics, vitamins, and polymeric carbohydrates, which reversibly complex with, or otherwise bind to, or are adsorbed or carried by, the particulate polymeric adsorbents. The binding may be due to electrostatic attraction, hydrophilic/hydrophobic interactions caused by van der Waals forces, specific affinity, or any combination thereof.

Most often, the biomaterials are produced in liquid media, either by chemical synthesis or by fermentation, or a combination of these methods, and are separated as solutions or fine dispersions from cell, cellular debris or other solids of a fermentation broth or cell culture medium. In any case, the resulting biomaterial-containing medium is generally accompanied by impurities and/or other biomaterials which must ultimately be separated if the biomaterial is to meet commercial or medical standards of purity.

For convenience and clarity of understanding, the term "bioproduct" is sometimes used in this specification to identify the biomaterial that is purified and/or separated by the method of the invention.

The polymeric absorbents used in the method of the invention are particulate, of such size that the particles will not permeate the filter membrane but will allow good flow through hollow fibers. The adsorbent particles have an average diameter of 0.01 to 5 $\mu$m, preferably 0.1 to 1.5 $\mu$m. The adsorbent particles usually are water-insoluble or substantially water-insoluble; consequently, the adsorbents and adsorbent-biomaterial complex will not pass through the pores of a membrane filter nor form a polarization layer on the membrane.

A particulate polymeric adsorbent meeting the foregoing standards can be used if it is also capable of selectively adsorbing a bioproduct contained in a liquid medium, but not any impurities or other biomaterials in the medium, and will not denature the bioproduct, or alternatively if it is capable of adsorbing the impurities or other biomaterials but not adsorbing or denaturing the bioproduct. The adsorbent particles may be charged or uncharged. A charged state may be achieved by the presence of functional groups which modify the hydrophobic/hydrophilic character of an adsorbent relative to an aqueous system containing a biomaterial. Suitable charged adsorbents are particulate ion exchange resins wherein the ion exchange functionality imparts a surface charge to a polymer. Typical uncharged polymers are ion exchange resin precursors, i.e. crosslinked or uncrosslinked solid polymer not yet functionalized.

If the particulate polymeric adsorbent is a charged material, the mechanism by which a biomaterial is bound into the complex may primarily be electrostatic attraction. If the adsorbent is unchanged, and even to some extent when the adsorbent is charged, the binding mechanism may be understood in terms of one or more of hydrophobic/hydrophilic attraction, specific affinity interaction, the other effects.

Preferably, the particulate polymeric adsorbent is characterized by the presence of ionogenic groups and comprises an ion exchange resin of micrometer or submicrometer particle size, carrying a charge opposite the charge on the bioproduct. As ion exchange resins, the adsorbents may comprise single resins containing anion exchange functionality, single resins containing both anionic and cationic functionality (amphoteric resins), or may be mixed, hybrid, chelating or composite resins having anionic or both anionic and cationic exchange character. Furthermore, both gel and macroreticular resins are useful.

Ion exchange resins useful in the invention include the macroreticular vinyl aromatic or acrylic resin adsorbents and exchangers described in US-A-3,037,052; 3,637,535; 3,843,566; 3,791,866; 3,275,548 and 3,357,158; the hybrid resins described in US-A-3,991,017; the composite resins described in US-A-3,645,922; the amphoteric resins described in US-A-4,202,737; and others described in Ion Exchange, J. Marinsky, ed., Vol. II, Chap. 6 (New York, 1969).

3

Examples of specific polymeric adsorbents useful in the method of the invention are homopolymers and copolymers formed from vinylidene monomers such as acrylic and methacrylic acids and esters, and other monoethylenically unsaturated monomers or mixtures thereof, such as monocyclic and polycyclic aromatic monomers, e.g. styrene and substituted styrenes. The monoethylenically unsaturated monomers may be polymerized without crosslinking or may be crosslinked in situ with a polyethylenically unsaturated monomer such as a polyvinyl aromatic hydrocarbon (e.g. divinyl benzene or divinyl toluene), a glycol dimethacrylate such as ethylene glycol dimethacrylate, or a polyvinyl ether of a polyhydric alcohol, such as divinoxyethane and trivinoxypropane.

The polymeric adsorbents may be prepared in a conventional manner, for example, by bulk, solution, suspension or emulsion polymerization. If the polymerization process is an emulsion polymerization, the desired small particle size range can be obtained directly, as shown in US-A-4,359,537 and 4,380,590 to Chong, US-A-4,200,695 to Chong, Isacoff and Neely, and US-A-4,537,683 to Isacoff and Neely, each of these patents being incorporated herein by reference. If the polymerization is suspension polymerization or another form of polymerization, the particulate product polymers can be reduced in size by grinding techniques well known in the art. In the case of irregularly shaped particles (e.g. ground resins), the above-mentioned particle sizes are, for the purposes of this invention, assumed to refer to the longest dimensions of the particles.

Water-insoluble, uncrosslinked or partially functionalized materials may also be suitable for use in the invention. For example, ion exchange polymers functionalized with an ionogenic group near the particle surface, e.g. a monolayer of ion exchange groups about the periphery of the bead, are useful. Lightly crosslinked or surface-crosslinked beads having low water-solubility are also effective.

The adsorbents of the foregoing Chong, Chong et al and Isacoff et al patents are, generally speaking, ion exchange resins composed of crosslinked polymers in the shape of spherical beads, bearing up to about 1.5, for example 0.1 to 1.5, functional groups per monomer unit. These groups can be strongly acidic (e.g. $-HSO_3$ groups), weakly acidic (e.g. $-COOH$ groups), strongly basic (e.g. quaternary ammonium groups), or weakly basic (e.g. tertiary amine groups).

As indicated, the preferred polymeric adsorbents are ion exchange resins, the selection of which in any given situation depends primarily on the electrical charge of the biomaterial to be purified and/or separated. If the charge of the biomaterial is negative, a positively charged (basic) resin is used; if the charge is positive, a negatively charged (acidic) resin is used. In either case, the selection can be easily made by one skilled in this art using the principles of ion exchange chemistry.

Preferably the amount of polymeric adsorbent used should be enough to adsorb most of the biomaterial in the liquid medium, but not so much that the medium becomes viscous and difficult to handle and filter. Preferably, the adsorbent is used in an amount approximately equivalent to the weight of bioproduct in the medium, for example about 0.01 to 10 wt.% in a medium containing the same weight of bioproduct.

The method of the invention may be carried out by first removing most of the particulate matter from the bioproduct-containing liquid medium by centrifugation, conventional filtration or other solid material separation technique, if the medium contains such solids. The adsorbent of choice, in a suitable amount, is then added to the filtrate or to a liquid medium containing the bioproduct and the other component(s) to be separated from the bioproduct. The resulting mixture may then be stirred for a time sufficient to permit adsorption of the bioproduct to the adsorbent particles, usually a matter of several minutes. The mixture is then passed through a filtration membrane, preferably by recirculating it through a module of the hollow fiber type. The membrane is selected so that it passes any impurities, biomaterials other than bioproduct and non-adsorbed bioproduct, but not the adsorbent particles carrying bioproduct. Conveniently, the membrane filters are those semipermeable membranes known in the art for their ability to remove dissolved or dispersed matter by ultrafiltration or microfiltration, but excluding separation of dissolved salts by the technique known as reverse osmosis.

The adsorbent-bioproduct complex is retained by the filter, and the permeate containing impurities and/or other biomaterials is collected and removed from the unit. The bioproduct is then liberated from the adsorbent, for example by known desorption methods. Depending on the nature of the bioproduct, this can be achieved by changing the pH of the medium, by changing the electrolyte balance, or by any other suitable method known in affinity chromatography or related fields.

The medium containing desorbed bioproduct is then passed through the same membrane filter and collected. Regenerated adsorbent is retained and can be reused.

The present invention will now be further illustrated by way of the following examples, which are for illustrative purposes only and are not to be construed as imposing any limitation on the scope of the invention. In the examples, all parts and percentages are by weight unless indicated otherwise.

4

Example 1

This example demonstrates the efficacy of a negatively charged adsorbent for separating a positively charged biomaterial (Cytochrome C) from a negatively charged biomaterial (bovine serum albumin).

(A) Adsorbent Loading:

Bovine serum albumin ("BSA"), 200 mg, was dissolved in 200 ml of 0.01 M potassium phosphate buffer in filtered, deionized water ("PPB solution"). The resulting solution was then filtered through a 0.22 micrometer Millipore filter. Total volume in the system at this point was 175 ml. One-half gram of strong acid, emulsion polymerized, styrene/divinylbenzene gellular copolymer (7.3% divinylbenzene crosslinker) resin beads of 0.26 ± 0.02 micrometer average diameter and cation exchange capacity = 5.1 meq/g dry, was then added to 195 ml of the BSA/PPB solution. To the resulting suspension was added 146.2 mg of Cytochrome C, Type III.

(B) Ultrafiltration:

The BSA and Cytochrome C preparations were then mixed and circulated for 15 minutes through the membrane of an Amicon H1MPO1-43 hollow fiber ultrafiltration system, cartridge height 20.32 cm (8 in), wherein the fibers have 0.11 cm (43 mils) internal diameter (I.D.) with 0.1 micrometer pore diameter and a 0.028 m$^2$ (0.3 ft$^2$) effective surface area. The permeate was collected and removed. The retained resin suspension was diafiltered for five volume replacements with PPB solution and then reconstituted to a volume of 200 ml. Analysis showed that 97.4 mg of the Cytochrome C remained on the resin and that 48.8 mg of the Cytochrome C and 88% of the BSA passed into the permeate.

(C) Adsorbent Unloading (elution):

Aqueous 1.0 M KCl solution, 200 ml, was added to the suspension, which was then recirculated through the ultrafiltration membrane for 15 minutes. The permeate was collected, diafiltered for seven volume replacements with 1.0 M KCl, and reconstituted to 200 ml. Analysis indicated that 102.0 mg of the Cytochrome C had eluted. Elution efficiency was calculated as follows:

$$\frac{102.0 \text{ mg eluted}}{97.4 \text{ mg loaded}} \times 100 = 105\%$$

Example 2

This example demonstrates efficient separation of Cytochrome C (positively charged biomaterial) and Penicillin G (positively charged biomaterial) with a negatively charged adsorbent.

(A) Adsorbent Loading:

Penicillin G ("PG"), 200 mg, was dissolved in 200 ml of PPB solution (described in Example 1). Total volume at this point was 200 ml. One-half gram of the strong acid ion exchange resin used in Example 1 was then added to 195 ml of the PPB solution containing the PG. To the resulting suspension was added 146.2 mg of Cytochrome C, Type III.

(B) Ultrafiltration:

The PG and Cytochrome C preparations were mixed and circulated for 15 minutes through the membrane of the same ultrafiltration system used in Example 1. The permeate was collected and removed. The retained resin suspension was diafiltered for five volume replacements with PPB solution and then reconstituted to a volume of 200 ml. Analysis showed that 105.6 mg of the Cytochrome C remained on the resin and that 40.6 mg of the Cytochrome C and 92% of the PG passed into the permeate.

(C) Adsorbent Unloading (elution) :

Aqueous 1.0 M KCl solution, 200 ml, was added to the resin suspension, which was then recirculated through the ultrafiltration membrane for 15 minutes. The permeate was collected, diafiltered for seven volume replacements with 1.0 M KCl, and reconstituted to 200 ml. Analysis showed that 109.8 mg of the Cytochrome C had eluted to give an elution efficiency calculated as follows:

$$\frac{109.8 \text{ mg eluted}}{105.6 \text{ mg loaded}} \times 100 = 104\%$$

Example 3

This example illustrates the use of an uncharged adsorbent for separation of a biomaterial, and also demonstrates that increasing the electrolyte level in the medium containing the biomaterial to be purified and/or separated reduces the loading capacity of the adsorbent, i.e. its ability to bond to the biomaterial.

a) To 195 ml of 0.1 M PPB solution (described in Example 1) was added KCl to bring the KCl concentration to 0.1 M, and 2.0 g (dry basis) of an emulsion copolymer of 50% hydroxyethyl acrylate and 50% trimethylolpropane trimethacrylate. To this 150 mg of Cytochrome C (described in Example 1) in 200 ml of the 0.1 M PPB/0.1 M KCl buffer solution was added, and the loading capacity of the copolymer was determined as in Example 1, using 1 M KCl/0.01M PPB solution as the eluent. 1.6 mg Cytochrome C per gram of copolymer was bound under these conditions, and 96.9% of that was eluted.

b) To 195 ml of distilled water was added 2.0 g (dry basis) of the emulsion copolymer described in (a) above. To this was added 150 mg of Cytochrome C and 200 ml distilled water, and the loading capacity was determined by ultrafiltration as in Example 1. 67.2 mg Cytochrome C per gram of copolymer was bound, and 99.5% of that was eluted by 1M KCl/0.01 M PPB solution.

Example 4

This example illustrates ultrafiltration chromatography of yeast-cell hexokinase using the process of the present invention.

Dried yeast cells (Sigma Chemical Co., Cat. No. Ysc-1) were lysed by suspending them in 0.12M ammonium hydroxide. When lysis was complete the pH of the suspension was reduced to 4.5 by adding acetic acid. The final volume was 1.6 liter and the solids content was 9%. The suspension was further diluted to 2.6 liters with deionized water and microfiltered in a filtration unit equipped with a Romicon HP1-47MP01 cartridge, to separate the cell debris from the soluble enzymes, including hexokinase (HK). The suspension was concentrated to 500 ml and then diafiltered against 10 volume replacements of 0.14M sodium acetate, pH 5.0. Recovery of hexokinase in the permeate was 73% of the initial enzyme content of the lysed suspension.

Hexokinase from 2 liters of the microfiltration filtrate containing 1 unit hexokinase and 0.96 mg protein/ml was concentrated by adsorption onto a strong acid, emulsion polymerized, styrene-7.3% divinylbenzene gellular resin of 0.26 micrometer average particle diameter and cation exchange capacity of 5.1 meq/g dry resin. The resin was then added to the suspension at a final concentration of 2100 ppm. The suspension of enzyme and resin was stirred slowly for 15 minutes at which time analysis of a filtered aliquot indicated no evidence of enzyme activity in the supernatant. When stirring was stopped, the resin settled rapidly to the bottom of the beaker and could be recovered in various ways. In this case the entire resin suspension was placed in the recirculation tank of the filtration unit equipped with the microfiltration cartridge indicated above. After recirculation for 15 minutes analysis of the filtrate indicated that 50% of the enzyme initially bound to the resin was present in the filtrate. The suspension was concentrated to 500 ml and diafiltered with 2 liters of the adsorption buffer. No enzyme activity was detected in the final diafiltrate. 500 ml of 4M NaCl was added to the retentate tank and recirculated for 15 minutes. The suspension was then concentrated to 500 ml. This procedure was repeated two additional times. Analysis of the 2M NaCl filtrate indicated that 60% of the adsorbed enzyme was recovered at this step.

**Claims**

1. A method for (i) separating a first water-soluble or water-dispersible bio-affecting substance, contained in a first liquid medium with one or more other components selected from impurities and other water-soluble and/or water-dispersible bio-affecting substances, from said one or more other components, and/or (ii) purifying said first bio-affecting substance contained in said first liquid medium together with said one or more other components, characterized in that the method comprises:-
   (a) forming a mixture comprising the first liquid medium and particulate, polymeric adsorbent capable of preferentially adsorbing the first bio-affecting substance or said one or more other components therefrom, the adsorbent having an average particle size of 0.01 to 5 $\mu$m and being selected from ion exchange resins and uncharged, unfunctionalized polymer particles, whereby the adsorbent reversibly binds the first bio-affecting substance or said one or more other components to form a complex;
   (b) subjecting the mixture from step (a) to membrane filtration, the membrane being impermeable to said complex, whereby said first bio-affecting substance is separated from said one or more other components and/or is purified.

2. A method as claimed in claim 1 for (i) separating the first water-soluble or water-dispersible bio-affecting substance from the first liquid medium comprising said first bio-affecting substance and said one or more other components, and/or (ii) purifying said first bio-affecting substance contained in said first liquid medium, wherein the particulate polymeric adsorbent is capable of preferentially adsorbing the first bio-affecting substance therefrom, whereby the adsorbent reversibly binds the first bio-affecting substance to form a complex, and wherein the membrane is permeable to said one or more other components but not to the complex, whereby the complex and said one or more other components are separated, and/or said first bio-affecting substance is purified.

3. A method as claimed in claim 2, comprising the additional step of:
   (c) liberating the first bio-affecting substance from the polymer particles of the complex, for example with electrolyte, into a second liquid medium.

4. A method as claimed in claim 3, which comprises the additional step of:
   (d) subjecting the second liquid medium, containing the liberated first bio-affecting substance and the adsorbent polymer particles, to membrane filtration as in step (b), whereby the first bio-affecting substance, but not the adsorbent polymer particles, accumulates in the permeate.

5. A method as claimed in any preceding claim, wherein the adsorbent comprises ion exchange resin bearing up to about 1.5 functional groups per monomer unit.

6. A method as claimed in claim 5, wherein the particles of the ion exchange resin comprise substantially spherical beads or ground particles.

7. A method as claimed in claim 5 or claim 6, wherein the ion exchange resin comprises acidic or basic ion exchange resin, for example the first bio-affecting substance is positively charged and the ion exchange resin is acidic, or the first bio-affecting substance is negatively charged and the ion exchange resin is basic.

8. A method as claimed in any of claims 1 to 4, wherein the particulate, polymeric adsorbent is in the form of uncharged, unfunctionalized polymer particles, and the particulate, polymeric adsorbent and the first bio-affecting substance are hydrophobic.

9. A method as claimed in any preceding claim, wherein the first bio-affecting substance comprises proteinaceous material, an amino acid, an antibiotic, a vitamin or a nucleic acid.

10. A method as claimed in any preceding claim, wherein the first bio-affecting substance and said one or more other components substances are suspended or dissolved in the first liquid medium, and/or the first liquid medium is aqueous and the particulate, polymeric adsorbent is water-insoluble or substantially water-insoluble.

11. A method as claimed in any preceding claim, wherein the other water-soluble and/or water-dispersible bio-affecting substance(s) comprise one or more of a protein, an amino acid, a nucleic acid, an antibiotic, or a vitamin.

12. Use of particulate, polymeric adsorbent for aiding (i) separation of a first water-soluble or water-dispersible bio-affecting substance, contained in a first liquid medium with one or more other components selected from impurities and other water-soluble and/or water-dispersible bio-affecting substances, from said one or more other components, and/or (ii) purification of said first bio-affecting substance contained in said first liquid medium together with said one or more other components, characterized in that:
(a) a mixture is formed comprising the first liquid medium and particulate, polymeric adsorbent capable of preferentially adsorbing the first bio-affecting substance or said one or more other components therefrom, the adsorbent having an average particle size of 0.01 to 5 $\mu$m and being selected from ion exchange resins and uncharged, unfunctionalized polymer particles, whereby the adsorbent reversibly binds the first bio-affecting substance or said one or more other components to form a complex; and
(b) the mixture from step (a) is subjected to membrane filtration, the membrane being impermeable to said complex, whereby said first bio-affecting substance is separated from said one or more other components and/or is purified.

**Revendications**

1. Procédé pour (I) la séparation d'une première substance bioactive soluble dans l'eau ou dispersable dans l'eau, contenue dans un premier milieu liquide avec un ou plusieurs autres composants choisis parmi des impuretés et d'autres substances bioactives solubles dans l'eau et/ou dispersables dans l'eau, d'avec le(s)dit(s) un ou plusieurs autres composants; et/ou (II) la purification de ladite première substance bioactive contenue dans ledit premier milieu liquide conjointement avec le(s)dit(s) un ou plusieurs autres composants, caractérisé en ce que le procédé comprend:
(a) la formation d'un mélange comprenant le premier milieu liquide et un adsorbant polymère particulaire capable d'adsorber hors de celui-ci préférentiellement la première substance bioactive ou le(s)dit(s) un ou plusieurs autres composants, l'adsorbant ayant une taille moyenne de particules allant de 0,01 à 5 $\mu$m et étant choisi parmi des résines échangeuses d'ions et des particules de polymère non chargées, non fonctionnalisées, ce par quoi l'adsorbant fixe réversiblement la première substance bioactive ou le(s)dit(s) un ou plusieurs autres composants pour former un complexe ;
(b) la soumission du mélange provenant de l'étape (a) à une filtration sur membrane, la membrane étant imperméable audit complexe, ce par quoi ladite première substance bioactive est séparée d'avec le(s)dit(s) un plusieurs autres composants et/ou est purifiée.

2. Procédé selon la revendication 1, pour (I) la séparation de la première substance bioactive, soluble dans l'eau ou dispersable dans l'eau, d'avec le premier milieu liquide comprenant ladite première substance bioactive et le(s)dit(s) un ou plusieurs autres composants, et/ou (II) la purification de ladite première substance bioactive contenue dans ledit premier milieu liquide, l'adsorbant polymère particulaire étant capable d'adsorber préférentiellement hors de celui-ci la première substance bioactive, ce par quoi l'adsorbant fixe réversiblement la première substance bioactive pour former un complexe, et la membrane étant perméable au(x)dit(s) un ou plusieurs autres composants mais non au complexe, ce par quoi le complexe et le(s)dit(s) un ou plusieurs autres composants sont séparés, et/ou ladite première substance bioactive est purifiée.

3. Procédé selon la revendication 2, comprenant l'étape supplémentaire de:

(c) libération de la première substance bioactive hors des particules de polymère du complexe, par exemple à l'aide d'un électrolyte, dans un second milieu liquide.

4. Procédé selon la revendication 3, comprenant l'étape supplémentaire de:

(d) soumission du second milieu liquide, contenant la première substance bioactive libérée et les particules de polymère adsorbant, à une filtration sur membrane comme dans l'étape (b), ce par quoi la première substance bioactive, mais non les particules de polymère adsorbant, s'accumule dans le perméat.

5. Procédé selon l'une quelconque des revendications précédentes, dans lequel l'adsorbant comprend une résine échangeuse d'ions portant jusqu'à environ 1,5 groupe fonctionnel par motif monomère.

6. Procédé selon la revendication 5, dans lequel les particules de la résine échangeuse d'ions comprennent des perles essentiellement sphériques ou des particules broyées.

7. Procédé selon la revendication 5 ou 6, dans lequel la résine échangeuse d'ions comprend une résine échangeuse d'ions acide ou basique, par exemple la première substance bioactive est chargée positivement et la résine échangeuse d'ions est acide, ou la première substance bioactive est chargée négativement et la résine échangeuse d'ions est basique.

8. Procédé selon l'une quelconque des revendications 1 à 4, dans lequel l'adsorbant polymère particulaire est sous la forme de particules de polymère non chargées, non fonctionnalisées, et l'adsorbant polymère particulaire et la première substance bioactive sont hydrophobes.

9. Procédé selon l'une quelconque des revendications prédédentes, dans lequel la première substance bioactive comprend une substance protéique, un aminoacide, un antibiotique, une vitamine ou un acide nucléique.

10. Procédé selon l'une quelconque des revendications précédentes, dans lequel la première substance bioactive et le(s)dit(s) un ou plusieurs autres composants sont en suspension ou dissous dans le premier milieu liquide, et/ou le premier milieu liquide est aqueux et l'adsorbant polymère particulaire est insoluble dans l'eau ou pratiquement insoluble dans l'eau.

11. Procédé selon l'une quelconque des revendications précédentes, dans lequel l'autre (les autres) substance(s) bioactive(s) soluble(s) dans l'eau et/ou dispersable(s) dans l'eau comprend(prennent) une ou plusieurs substances consisen une protéine, un aminoacide, un acide nucléique, un antibiotique ou une vitamine.

12. Utilisation d'un adsorbant polymère particulaire pour faciliter (I) la séparation d'une première substance bioactive soluble dans l'eau ou dispersable dans l'eau, contenue dans un premier milieu liquide avec un ou plusieurs autres composants choisis parmi des impuretés et d'autres substances bioactives solubles dans l'eau et/ou dispersables dans l'eau, d'avec le(s)dit(s) un ou plusieurs autres composants, et/ou (II) la purification de ladite première substance bioactive contenue dans ledit premier milieu liquide conjointement avec le(s)dit(s) un ou plusieurs autres composants, caractérisée en ce que:

(a) on prépare un mélange comprenant le premier milieu liquide et un adsorbant polymère particulaire capable de préférentiellement adsorber hors de celui-ci la première substance bioactive ou le(s)dit(s) un ou plusieurs autres composants, l'adsorbant ayant une taille moyenne de particules allant de 0,01 à 5 $\mu$m et étant choisi parmi des résines échangeuses d'ions et des particules de polymère non chargées, non-fonctionnalisées, ce par quoi l'adsorbant fixe réversiblement la première substance bioactive ou le(s)dit(s) un ou plusieurs autres composants pour former un complexe; et
(b) on soumet le mélange provenant de l'étape (a) à une filtration sur membrane, la membrane étant imperméable audit complexe, ce par quoi ladite première substance bioactive est séparée d'avec le(s)dit(s) un ou plusieurs autres composants et/ou est purifiée.

**Patentansprüche**

1. Verfahren zum

(i) Abtrennen einer ersten wasserlöslichen oder in Wasser dispergierbaren biowirksamen Substanz, die in einem ersten flüssigen Medium mit einer oder mehreren anderen Komponenten enthalten ist, die ausgewählt sind aus Verunreinigungen und anderen wasserlöslichen und/oder in Wasser dispergierbaren biowirksamen Substanzen, von der einen oder den mehreren anderen Substanzen, und/oder

(ii) Reinigen der ersten biowirksamen Substanz, die in dem ersten flüssigen Medium zusammen mit der einen oder den mehreren anderen Komponenten enthalten ist,

**dadurch gekennzeichnet,** daß man bei dem Verfahren

(a) ein Gemisch herstellt, welches das erste flüssige Medium und ein teilchenförmiges polymeres Adsorptionsmittel enthält, welches zur bevorzugten Adsorption der ersten biowirksamen Substanz oder der einen oder der mehreren anderen Komponenten daraus befähigt ist, wobei das Adsorptionsmittel eine mittlere Teilchengröße von 0,01 bis 5 $\mu$m aufweist und ausgewählt wird aus Ionenaustauscherharzen und ungeladenen unfunktionalisierten Polymerteilchen, wodurch das Adsorptionsmittel die erste biowirksame Substanz oder die eine oder die mehreren anderen Komponenten reversibel unter Bildung eines Komplexes bindet;

(b) das Gemisch aus Schritt (a) der Membranfiltration unterwirft, wobei die Membran gegenüber dem Komplex impermeabel ist, wodurch die erste biowirksame Substanz von der einen oder den mehreren anderen Komponenten abgetrennt wird und/oder gereinigt wird.

2. Verfahren nach Anspruch 1 zum

(i) Abtrennen der ersten wasserlöslichen oder in Wasser dispergierbaren biowirksamen Substanz von dem ersten flüssigen Medium, welches die erste biowirksame Substanz und die eine oder die mehreren anderen Komponenten enthält und/oder

(ii) Reinigen der ersten biowirksamen, in dem ersten flüssigen Medium enthaltenden Substanz, wobei das teilchenförmige polymere Adsorptionsmittel befähigt ist, die erste biowirksame Substanz bevorzugt daraus zu adsorbieren, wodurch das Adsorptionsmittel die erste biowirksame Substanz reversibel unter Bildung eines Komplexes bindet, und wobei die Membran gegenüber der einen oder den mehreren anderen Komponenten, nicht jedoch gegenüber dem Komplex permeabel ist, wodurch der Komplex und die eine oder die mehreren anderen Komponenten abgetrennt werden und/oder die erste biowirksame Substanz gereinigt wird.

3. Verfahren nach Anspruch 2 mit dem weiteren Schritt, daß man

(c) die erste biowirksame Substanz aus den Polymerteilchen des Komplexes z.B. mit einem Elektrolyten in ein zweites flüssiges Medium freisetzt.

4. Verfahren nach Anspruch 3 mit dem weiteren Schritt, daß man

(d) das zweite flüssige Medium, welches die freigesetzte erste biowirksame Substanz und die Adsorptionsmittel-Polymerteilchen enthält, der Membranfiltration gemäß Schritt (b) unterwirft, wodurch sich die erste biowirksame Substanz in dem Permeat anreichert, nicht jedoch die Adsorptionsmittel-Polymerteilchen.

5. Verfahren nach einem der vorhergehenden Ansprüche, wobei das Adsorptionsmittel ein Ionenaustauscherharz enthält, welches bis zu 1,5 funktionelle Gruppen pro Monomereinheit trägt.

6. Verfahren nach Anspruch 5, wobei die Teilchen des Ionenaustauscherharzes im wesentlichen kugelförmige sphärische Kügelchen oder gemahlene Teilchen umfassen.

7. Verfahren nach Anspruch 5 oder 6, wobei das Ionenaustauscherharz ein saures oder basisches Ionenaustauscherharz enthält, die erste biowirksame Substanz beispielsweise positiv geladen und das Ionenaustauscherharz sauer ist, oder die erste biowirksame Substanz negativ geladen und das Ionenaustauscherharz basisch ist.

8. Verfahren nach einem der Ansprüche 1 bis 4, wobei das teilchenförmige polymere Adsorptionsmittel in Gestalt von ungeladenen unfunktionalisierten Polymerteilchen vorliegt und das teilchenförmige polymere Adsorptionsmittel und die erste biowirksame Substanz hydrophob sind.

9. Verfahren nach einem der vorhergehenden Ansprüche, wobei die erste biowirksame Substanz ein proteinhaltiges Material, eine Aminosäure, ein Antibiotikum, ein Vitamin oder eine Nukleinsäure enthält.

10. Verfahren nach einem der vorhergehenden Ansprüche, wobei die erste biowirksame Substanz und die eine oder die mehreren anderen Substanzen in dem ersten flüssigen Medium suspendiert oder gelöst sind und/oder das erste flüssige Medium wäßrig ist und das teilchenförmige polymere Adsorptionsmittel wasserunlöslich oder im wesentlichen wasserunlöslich ist.

11. Verfahren nach einem der vorhergehenden Ansprüche, wobei die andere wasserlösliche und/oder in Wasser dispergierbare biowirksame Substanz(en) eines oder mehrere aus einem Protein, einer Aminosäure, einer Nukleinsäure, einem Antibiotikum oder einem Vitamin enthält bzw. enthalten.

12. Verwendung eines teilchenförmigen polymeren Adsorptionsmittels als Hilfe
(i) beim Trennen einer ersten wasserlöslichen oder in Wasser dispergierbaren biowirksamen Substanz, die in einem ersten flüssigen Medium mit einer oder mehreren anderen Komponenten enthalten sind, die ausgewählt sind aus Verunreinigungen und anderen wasserlöslichen und/oder in Wasser dispergierbaren biowirksamen Substanzen, von der einen oder den mehreren anderen Komponenten, und/oder
(ii) beim Reinigen der ersten bioaktiven Substanz, die zusammen mit der einen oder den mehreren anderen Komponenten in dem ersten flüssigen Medium enthalten ist,
**dadurch gekennzeichnet,** daß man
(a) ein Gemisch herstellt, welches das erste flüssige Medium und ein teilchenförmiges polymeres Adsorptionsmittel enthält, welches befähigt ist, die erste biowirksame Substanz oder die eine oder die mehreren anderen Komponenten bevorzugt daraus zu adsorbieren, wobei das Adsorptionsmittel eine mittlere Teilchengröße von 0,01 bis 5 $\mu$m aufweist und ausgewählt wird aus Ionenaustauscherharzen und ungeladenen unfunktionalisierten Polymerteilchen, wodurch das Adsorptionsmittel die erste biowirksame Substanz oder die eine oder die mehreren anderen Komponenten unter Bildung eines Komplexes reversibel bindet, und
(b) das Gemisch aus Schritt (a) der Membranfiltration unterwirft, wobei die Membran gegenüber dem Komplex impermeabel ist, wodurch die erste biowirksame Substanz von der einen oder den mehreren anderen Komponenten abgetrennt wird und/oder gereinigt wird.